# EUROPÄISCHE PATENTSCHRIFT

(11) **EP 1 834 842 B1**
(45) Veröffentlichungstag und Bekanntmachung des Hinweises auf die Patenterteilung: **04.07.2018**
(21) Anmeldenummer: 07004500.0
(22) Anmeldetag: 06.03.2007
(51) Int. Cl.: B60R 16/03, H02J 7/14

(54) **Stromversorgungseinrichtung eines Nutzfahrzeugs**
Power supply device for a commercial vehicle
Dispositif d'alimentation électrique d'un véhicule utilitaire

(30) Priorität: 17.03.2006 DE 102006012290
(43) Veröffentlichungstag der Anmeldung: 19.09.2007
(73) Patentinhaber: MAN Truck & Bus AG, 80995 München (DE)
(72) Erfinder: Eisermann, Günter, 85757 Karlsfeld (DE); Hackl, Andreas, 81829 München (DE)
(74) Vertreter: v. Bezold & Partner Patentanwälte - PartG mbB

(56) Entgegenhaltungen:
- DE-A1- 19 943 466
- US-A- 5 233 229

## Beschreibung

### Technisches Gebiet:

Die Erfindung betrifft eine Stromversorgungseinrichtung eines Nutzfahrzeugs mit wenigstens zwei parallel geschalteten Generatoren, die über Leistungsanschlüsse verfügen, an die jeweils zumindest ein Stromkreis, in dem elektrische Verbraucher vorgesehen sind, angeschlossen ist.

### Stand der Technik:

Die elektrische Anlage in einem Nutzfahrzeug hat eine Vielzahl von Aufgaben, um den Fahrbetrieb sowie die Sicherheit und den Komfort zu gewährleisten. Zur elektrischen Anlage gehören zur Stromerzeugung der Generator mit einem Regler, der Akkumulator zur Energiespeicherung, Bauteile und Leitungen zur Energieverteilung sowie die Verbraucher der elektrischen Energie. Um sämtliche Verbraucher ausreichend mit elektrischer Energie versorgen zu können, benötigt ein Nutzfahrzeug eine eigene, leistungsfähige Energiequelle. Diese Aufgabe übernimmt im Fahrbetrieb der Generator. Neben der Versorgung der Verbraucher wird mit Hilfe des Generators auch die Batterie geladen, die bei abgeschaltetem Motor die Verbraucher, wie zum Beispiel den Starter, mit elektrischer Energie versorgt. Hierbei werden grundsätzlich Gleich- und Drehstromgeneratoren unterschieden. Gleichstromgeneratoren werden vor allem aufgrund ihres hohen Gewichts in Fahrzeugen heute nicht mehr verwendet.

Die Miniaturisierung in der Halbleitertechnik und Elektronik hat es ermöglicht, sowohl den Gleichrichter als auch den Regler für die vom Drehstromgenerator erzeugten Wechselspannungen im Generatorgehäuse unterzubringen.

Die heute üblicherweise verwendeten Generatoren werden überwiegend direkt vom Motor angetrieben und sind an dessen Gehäuse angebaut. Der Antrieb erfolgt zunehmend über Keilrippenriemen. Durch Schwenken des Generators oder durch spezielle Spannvorrichtungen wird die Spannung des Riemens eingestellt. Das Übersetzungsverhältnis vom Motor zum Drehstromgenerator in einem Nutzfahrzeug ist derart ausgelegt, dass der Generator bereits bei Leerlaufdrehzahl die Versorgung der Verbraucher und das Laden der Batterie übernimmt, so dass auch in diesem Betriebsfall eine positive Energiebilanz vorhanden ist. Die vom Drehstromgenerator erzeugte Wechselspannung wird mit Hilfe eines Gleichrichters gleichgerichtet, damit Verbraucher und Batterie mit elektrischer Energie versorgt werden können. Dies geschieht üblicherweise durch sechs Dioden, pro Phase eine Plus- und eine Minusdiode, die im Gleichrichter angeordnet sind. Die Schaltung der Dioden wird als Drehstrom-Brückenschaltung bezeichnet, wobei sowohl die positiven als auch die negativen Halbwellen für die Gleichstromerzeugung genutzt werden.

In Nutzfahrzeugen werden überwiegend Anlagen mit 28 bzw. 24 Volt Gleichspannung betrieben. Durch eine elektronische Regelschaltung wird die Generatorspannung bei unterschiedlicher Motordrehzahl weitgehend konstant gehalten. Damit wird die Ladung der Batterie gesichert und sowohl diese als auch Verbraucher, wie z. B. Lampen und die elektronischen Systeme vor Überlast geschützt, so dass eine zuverlässige und langlebige Funktion gewährleistet ist.

Da in modernen Nutzfahrzeugen immer mehr elektrische sowie elektronische Komponenten zum Einsatz kommen, ist auch der Bedarf an elektrischer Energie in Nutzfahrzeugen in den letzten Jahren stetig gestiegen. Von dieser Entwicklung sind sowohl Lastkraftwagen als auch Omnibusse betroffen. Bei Omnibussen ist hierbei insbesondere zu berücksichtigen, dass bei deren Betrieb im Stadtverkehr kurzen Fahrzeiten verhältnismäßig lange Ruhezeiten, bspw. an den Endhaltestellen, gegenüberstehen. Aus diesem Grund kommen in Nutzfahrzeugen, insbesondere in Omnibussen, immer häufiger mehrere Generatoren zum Einsatz.

In diesem Zusammenhang ist aus der DE 101 59 796 A1 eine Stormversorgungseinrichtung mit zwei Akkumulatoren und zwei Generatoren in einem Nutzfahrzeug bekannt. Wesentlich bei dem in dieser Druckschrift beschriebenen System ist, dass ein Karosseriestromkreis sowie ein Anlasserstromkreis vorgesehen sind, wobei die Stormkreise entweder als ein Stromkreis oder als zwei separate Stromkreise betrieben werden können. Um den wahlweisen Betrieb des Fahrzeugs mit einem oder zwei Stromkreisen zu realisieren, sind entsprechende Relais vorgesehen. Eine bestimmte Schaltung dieser Relais stellt sicher, dass nach dem Startvorgang der Anlasserstromkreis und der Karosseriestromkreis so lange voneinander getrennt bleiben, bis der Akkumulator des Anlasserstromkreises voll aufgeladen ist. Hierbei sind an den Anlasserstromkreisen nur die Verbraucher des Anlasserstromkreises angeschlossen, die weniger Strom verbrauchen als die Verbraucher im Karosseriestromkreis. Sobald der Akkumulator des Anlasserstromkreises voll aufgeladen ist, erfolgt eine gesteuerte

Schaltung der Relais, so dass nunmehr beide Generatoren Strom in den gesamten Stromkreis liefern. Durch erneutes Schalten der Relais wird der Akkumulator des Anlasserstromkreises aus dem zusammengeschalteten Stromkreis herausgeschaltet und damit von den übrigen Verbrauchern getrennt. Die technische Lösung soll sicher stellen, dass für den Startvorgang stets ein voll geladener Akkumulator zur Verfügung steht.

Zur Regelung der Betriebsspannung in einem Kraftfahrzeug ist des Weiteren aus der EP 1 102 381 A1 eine Spannungsregelung für den Drehstromgenerator eines Kraftfahrzeuges bekannt, die über einen Multifunktionsregler zur Regelung der Generatorspannung, über einen zentralen Bordrechner, der die Klemmenspannung des Akkumulators, die Ausgangsspannung des Generators und die Drehzahl des Verbrennungsmotors als Eingangssignale hat, verfügt. Die Regelung zeichnet sich dadurch aus, dass die Spannungsvorgabe für die Multifunktionsregler zur Regelung der Ausgangsspannung des Generators vom zentralen Bordrechner erfolgt und dass auch die Werte der Klemmspannung in den zentralen Bordrechner eingegeben werden. Dadurch, dass durch den zentralen Bordrechner die Spannungsvorgabe dem Multifunktionsregler vorgegeben bzw. "vorgetäuscht" wird, kann die Regelung der Generatorspannung bezogen auf den Fahrzeugtyp und den Betriebseinsatz flexibel gestaltet werden. Dadurch soll die Akkumulatorlebensdauer verlängert und der Energiebedarf für die Stromversorgung des Fahrzeuges minimiert werden.

Problematisch bei allen Stromerzeugungssystemen, die über wenigstens zwei Generatoren verfügen, ist, dass die Ausgangsleistung der verschiedenen Generatoren nicht homogen ist. So unterscheidet sich einerseits die von den verschiedenen Generatoren in die Stromkreise eingespeiste elektrische Leistung und andererseits variiert auch die Spannung jedes einzelnen Generators während des Betriebs. Derartige Schwankungen bei der Bereitstellung der elektrischen Energie durch verschiedene Generatoren sind zum Einen nachteilig für den Ladevorgang des Akkumulators und zum Anderen tragen derartige Schwankungen bei der Versorgung der einzelnen Stromkreise teilweise erheblich zu einer Verkürzung der Lebensdauer der einzelnen elektrischen Verbraucher bei.

Ausgehend von dem bekannten Stand der Technik liegt der Erfindung die Aufgabe zugrunde, eine Stormversorgungseinrichtung für ein Nutzfahrzeug, die über wenigstens zwei Generatoren verfügt, derart weiterzubilden, dass Schwankungen der Ausgangsleistung der verschiedenen Generatoren weitgehend unterbunden werden. Hierbei soll insbesondere auch darauf geachtet werden, dass die technische Lösung regelungstechnisch einfach und ohne großen fertigungstechnischen Aufwand zu realisieren ist.

Die zuvor genannte Aufgabe wird mit einer Stromversorgungseinrichtung gemäß des geltendes Anspruchs 1 gelöst. Vorteilhafte Ausgestaltungen der Erfindung sind Gegenstand der Unteransprüche und werden unter Bezugnahme auf die Figuren anhand von Ausführungsbeispielen näher erläutert.

Erfindungsgemäß ist eine Stromversorgungseinrichtung eines Nutzfahrzeugs mit wenigstens zwei parallel geschalteten Generatoren, die über Leistungsanschlüsse verfügen, an die jeweils zumindest ein Stromkreis, in dem elektrische Verbraucher vorgesehen sind, angeschlossen ist, derart weitergebildet worden, dass die Leistungsanschlüsse der wenigstens zwei parallel geschalteten Generatoren über eine Kurzschlussleitung, an die ausschließlich die Leistungsanschlüsse angeschlossen sind, miteinander verbunden sind. Die erfindungsgemäße technische Lösung zeichnet sich somit insbesondere dadurch aus, dass die Leistungsanschlüsse mit Hilfe von elektrisch leitenden Kurzschlussleitungen miteinander verbunden sind, ohne dass in diesen Kurzschlussleitungen elektrische Verbraucher vorgesehen sind. Überraschend hat sich gezeigt, dass eine derartige Verschaltung wenigstens zweier Generatoren dazu führt, dass die Ausgangsleistung der parallel geschalteten Generatoren weitgehend homogenisiert wird.

Damit werden durch eine direkte elektrische Verbindung der Generatorleistungsausgänge (B⁺) kurzfristige Spannungsschwankungen weitgehend vermieden. Dies wird insbesondere dadurch erreicht, dass die wenigstens eine die Generatorleistungsausgänge (B⁺) verbindende Kurzschlussleitung eine deutlich geringere Länge und einen deutlich geringeren Leitungswiderstand als die von den Generatorleistungsausgänge (B⁺) zur Batterie führenden Leitungen aufweist. Dies führt zu einer erheblichen Optimierung der Energieversorgung eines Kraftfahrzeugs, insbesondere eines Nutzfahrzeugs.

In einer speziellen Ausführungsform der Erfindung handelt es sich bei den Generatoren um Drehstromgeneratoren, die von einer Brennkraftmaschine angetrieben werden. Vorzugsweise erfolgt der Antrieb hierbei über eine mechanische Wirkverbindung, die beispielsweise mittels eines Riemens hergestellt wird. Der erfindungswesentliche Gedanke ist jedoch nicht auf mechanisch angetriebene Generatoren beschränkt.

So ist es ebenfalls denkbar, dass wenigstens einer der Generatoren als Energiewandler ausgebildet ist, in dem auf elektrochemischem Weg Energie erzeugbar ist. Auch bei Einsatz derartiger Generatoren, bspw. Brennstoffzellen, zur Erzeugung elektrischer Energie ist es mit Hilfe der erfindungsgemäßen Verschaltung, bei der die Leistungsanschlüsse der Generatoren durch Kurzschlussleitungen miteinander verbunden sind, möglich, die Ausgangsleistung der parallel geschalteten Generatoren weitgehend zu homogenisieren. Vorzugsweise wird zur Speicherung der von den Generatoren erzeugten elektrischen Energie wenigstens ein Akkumulator eingesetzt.

In diesem Zusammenhang ist es in einer speziellen Gestaltung der Erfindung ebenfalls denkbar, dass zumindest ein Akkumulator bei Auftreten bestimmter Betriebszustände, bspw. während des Starvorgangs, zur Einspeisung elektrischer Energie in wenigstens einen Stromkreis eines Kraftfahrzeugs quasi als Generatorersatz eingesetzt wird. Auch in diesem Fall ist es möglich eine Homogenisierung der Ausgangsleistung der Generatoren zu erreichen, indem durch eine Kurzschlussleitung, die die Leistungsanschlüsse der wenigstens zwei Generatoren, unter denen sich bei dieser speziellen Ausführungsform zumindest ein Ersatzgenerator befindet, miteinander elektrisch leitend verbunden werden.

Im Folgenden wird die Erfindung ohne Beschränkung des allgemeinen Erfindungsgedankens anhand von Ausführungsbeispielen unter Bezugnahme auf die Figuren näher erläutert. Es zeigen:
- Fig. 1:: Schaltschema einer Stromerzeugungseinrichtung mit drei Generatoren, deren Leistungsanschlüsse mittels Kurzschlussleitungen miteinander verbunden sind;
- Fig. 2:: Darstellung der Batteriespannung, des Batteriestroms sowie der Außentemperatur, gemessen während einer Schicht (ca. 20 Stunden), Darstellung in Diagramm;
- Fig. 3: Darstellung der Generatorspannung, des Generatorstroms sowie der Ladebilanz nach einer Standzeit von ca. 10 Tagen in einem Diagramm.

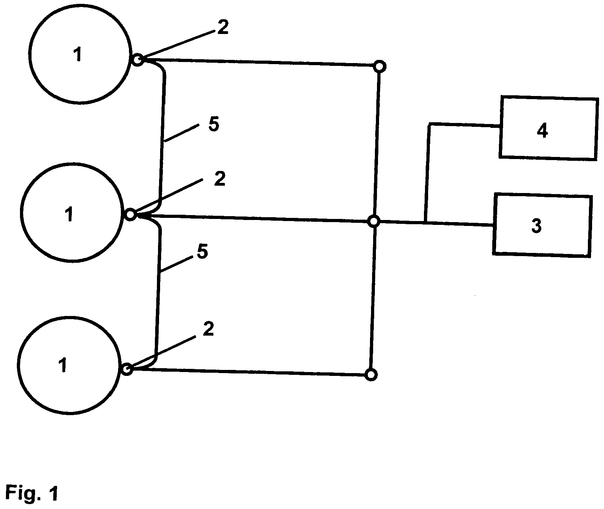

In Fig. 1 ist ein Schaltschema einer Stromversorgungseinrichtung dargestellt, die die elektrischen Verbraucher eines Omnibusses mit elektrischer Energie versorgt. Hierbei sind drei Generatoren 1 vorgesehen, die parallel verschaltet sind. Die drei Leistungsanschlüsse 2 (B⁺) der Generatoren 1 sind mit einer Batterie 3 verbunden, über die bei Bedarf, bspw. während des Startvorgangs, die elektrischen Verbraucher ebenfalls mit elektrischer Energie versorgbar sind. Die Generatoren 1 dienen sowohl während des Stillstandes des Fahrzeugs als auch während der Fahrt dem Laden der Batterie 3. Zusätzlich zu den Leistungsanschlüssen 2, über die die drei Generatoren 1 jeweils mit wenigstens einem elektrischen Stromkreis 4 eines Omnibusses verbunden sind, wird an den Leistungsanschlüssen 2 der Generatoren 1 jeweils eine Kurzschlussleitung 5 angebracht, die jeweils die Leistungsanschlüsse 2 zweier Generatoren 1 elektrisch leitend verbindet. In dem dargestellten Ausführungsbeispiel sind zwei dieser Kurzschlussleitungen 1 vorgesehen. Mit Hilfe der in Figur 1 dargestellten Kurzschlussleitungen 5 wird sichergestellt, dass die Ausgangsleistung der drei Generatoren 1 weitgehend homogenisiert wird. Dies führt zu einer erheblichen Optimierung der Energieversorgung im Fahrzeug.

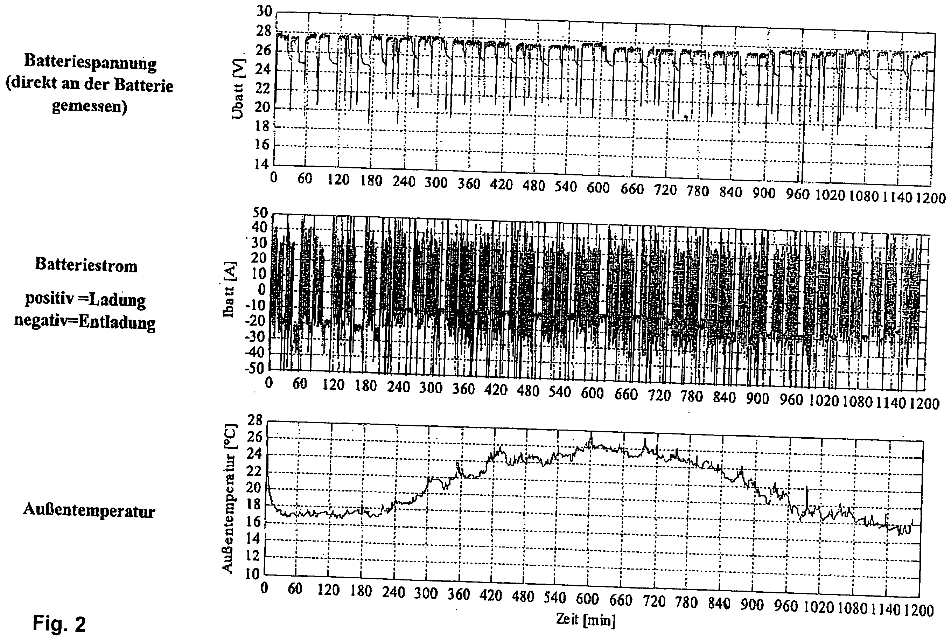

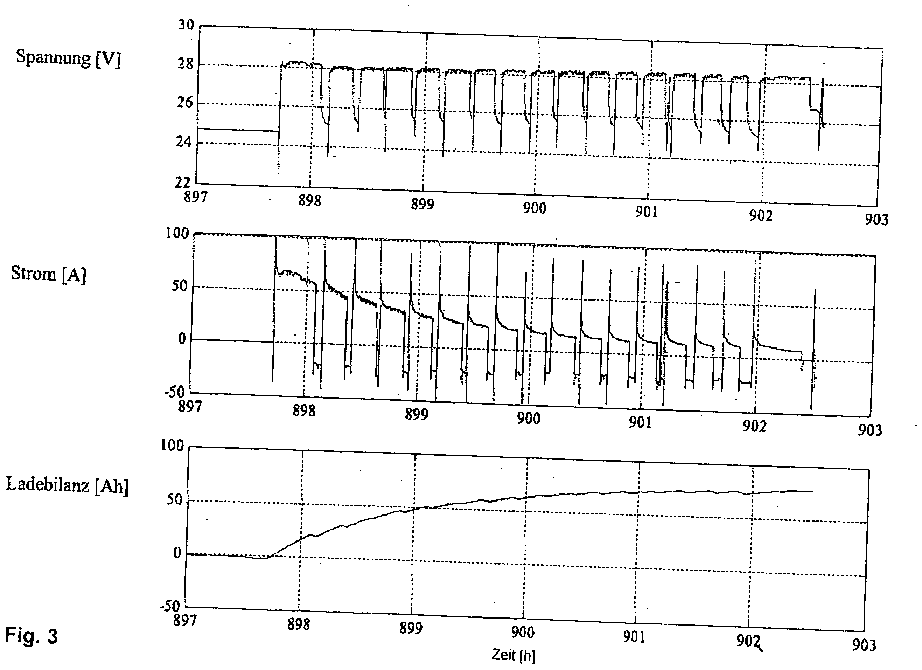

Die Figuren 2 und 3 veranschaulichen den Effekt der in Figur 1 dargestellten Verschaltung mit Hilfe entsprechender Diagramme, wobei die in Figur 2 aufgezeigten Messdaten in einem Fahrzeug ohne Kurzschlussbrücke und die in Figur 3 abgebildeten Messdaten in einem Fahrzeug mit Kurzschlussbrücke aufgenommen worden sind. Die Messdaten wurden jeweils in einem Omnibus aufgenommen, der im innerstädtischen Linienverkehr eingesetzt worden ist. Die Belastung einer elektrischen Anlage eines derartig betriebenen Omnibusses zeichnet sich vor allem dadurch aus, dass relativ kurzen Wegstrecken verhältnismäßig lange Stillstandszeiten gegenüberstehen. Hierbei treten jeweils in kurzen Abständen abwechselnd Beschleunigungs- und Bremsphasen auf. Weiterhin stehen derartige Omnibusse an den jeweiligen Endhaltestellen verhältnismäßig lange still, was oftmals zu einer erheblichen Entladung der Batterie führt. Aus diesem Grund ist es von besonderer Bedeutung, dass die Batterien eines Stadtlinienomnibusses während der vergleichsweise kurzen Fahrzeiten zügig und möglichst vollständig aufgeladen werden.

In diesem Zusammenhang zeigen die Figuren 2 und 3 jeweils drei Diagramme, in denen auf der Abszisse die für die Messung benötigte Zeit und auf der Ordinate die an der Batterie gemessene Spannung, der Batteriestrom sowie in Figur 2 die während der Messung herrschende Außentemperatur und in Figur 3 die Ladebilanz aufgetragen sind.

Wie der Figur 2 zu entnehmen ist, treten bei einem Stadtlinienomnibus, der über drei herkömmlich, also parallel ohne Kurzschlussbrücke verschaltete Generatoren verfügt, erhebliche Spannungsschwankungen und vor allem auch Schwankungen des Batteriestroms auf. Insbesondere während der Fahrzeit des Busses schwankt die Spannung mit einer vergleichsweise hohen Frequenz und fällt zwischenzeitlich auf Werte unter 20 V. Bezüglich des Batteriestroms ist ebenfalls festzuhalten, dass die jeweiligen Amplituden der Stromstärke erheblich sind und der Entladestrom teilweise mehr als 50 A beträgt. Aufgrund dieser Betriebsweise der Batterie wird diese einerseits nie vollkommen geladen und zum anderen wird die Lebensdauer der Batterie negativ beeinflusst.

In Figur 3 sind demgegenüber die Messdaten grafisch dargestellt, die in einem Stadtlinienbus aufgenommen worden sind, der mit drei und über Kurzschlussleitungen verschalteten Generatoren ausgerüstet ist. Durch die direkte Verbindung der GeneratorLeistungsausgänge (B⁺) wird die Ausgangsleistung der drei parallel geschalteten generatoren homogenisiert, was zu einer erheblichen Optimierung der Energieversorgung führt. Wie der Figur 3 zu entnehmen ist, sind die Spannungsschwankungen gegenüber einem herkömmlichen System verringert worden, so dass die Spannung trotz längerer fahrt im Stadtverkehr nicht mehr unter einen Wert von ca. 25 V abfällt. Darüber hinaus ist vor allem zu beachten, dass die innerhalb einer Stunde während des Betriebs auftretenden positiven und negativen Stromspitzen verringert und der Verlauf des Batteriestroms erheblich homogenisiert worden ist. Statt der bisher aufgetretenen schwankenden Stromspitzen ist nunmehr nach dem Anfahrvorgang ein fast konstanter Ladestrom zwischen 45 und 55 A zu beobachten. Auf diese Weise ermöglicht das Vorsehen von Kurzschlussleitungen an den parallel geschalteten Generatoren eine effektivere Ladung der Batterien in einem Stadtomnibus, was letztendlich auch eine höhere Lebensdauer der Batterien bedingt.

### Bezugszeichenliste

- 1: Generator
- 2: Leistungsanschluss des Generators (B⁺)
- 3: Batterie
- 4: Fahrzeugstromkreis
- 5: Kurzschlussleitung/Strombrücke

## Patentansprüche

1. Stromversorgungseinrichtung eines Kraftfahrzeugs, insbesondere eines Nutzfahrzeugs, mit wenigstens zwei parallel geschalteten Generatoren (1), die über Leistungsanschlüsse (2) verfügen, an die jeweils zumindest ein Stromkreis (4), in dem elektrische Verbraucher vorgesehen sind, angeschlossen ist, **dadurch gekennzeichnet, dass** die Leistungsanschlüsse (2) der wenigstens zwei parallel geschalteten Generatoren (1) über eine Kurzschlussleitung (5) direkt elektrisch leitend mit einander verbunden sind.

2. Stromversorgungseinrichtung nach Anspruch 1, **dadurch gekennzeichnet, dass** die Kurzschlussleitung (5) derart als elektrischer Leiter ohne zusätzlichen Verbraucher elektrischer Energie ausgeführt ist, dass ein elektrischer Widerstand der Kurzschlussleitung (5) einem elektrischen Widerstand des elektrischen Leiters entspricht.

3. Stromversorgungseinrichtung nach Anspruch 1 oder 2, **dadurch gekennzeichnet, dass** wenigstens einer der Generatoren (1) mit einer Brennkraftmaschine in Wirkverbindung steht.

4. Stromversorgungseinrichtung nach einem der Ansprüche 1 bis 3, **dadurch gekennzeichnet, dass** zumindest einer der Generatoren (1) als Drehstromgenerator ausgebildet ist.

5. Stromversorgungseinrichtung nach einem der Ansprüche 1 bis 4, **dadurch gekennzeichnet, dass** wenigstens einer der Generatoren (1) als Energiewandler ausgeführt ist, in dem auf elektrochemischem Weg elektrische Energie erzeugbar ist.

6. Stromversorgungseinrichtung nach einem der Ansprüche 1 bis 5, **dadurch gekennzeichnet, dass** in zumindest einem Stromkreis (4) ein Akkumulator (3) vorgesehen ist.

## Claims

1. Power supply device of a motor vehicle, in particular a utility vehicle, comprising at least two generators (1) which are connected in parallel and which have power connections (2), at least one electrical circuit (4), in which electrical consumers are provided, being connected to each of the said power connections, **characterized in that** the power connections (2) of the at least two generators (1) which are connected in parallel are directly electrically conductively connected to one another via a short-circuit line (5).

2. Power supply device according to Claim 1, **characterized in that** the short-circuit line (5) is designed as an electrical conductor without additional consumers of electrical energy in such a way that an electrical resistance of the short-circuit line (5) corresponds to an electrical resistance of the electrical conductor.

3. Power supply device according to Claim 1 or 2, **characterized in that** at least one of the generators (1) is operatively connected to an internal combustion engine.

4. Power supply device according to one of Claims 1 to 3, **characterized in that** at least one of the generators (1) is in the form of a three-phase generator.

5. Power supply device according to one of Claims 1 to 4, **characterized in that** at least one of the generators (1) is designed as an energy converter in which electrical energy can be produced in an electrochemical manner.

6. Power supply device according to one of Claims 1 to 5, **characterized in that** a rechargeable battery (3) is provided in at least one electrical circuit (4).

## Revendications

1. Dispositif d'alimentation électrique d'un véhicule automobile, notamment d'un véhicule utilitaire, comprenant au moins deux générateurs (1) branchés en parallèle, lesquels disposent de bornes de puissance (2) auxquelles est respectivement branché au moins un circuit électrique (4) dans lequel se trouvent des consommateurs électriques, **caractérisé en ce que** les bornes de puissance (2) des au moins deux générateurs (1) branchés en parallèle peuvent être reliées ensemble de manière électriquement conductrice par le biais d'une ligne de court-circuit (5).

2. Dispositif d'alimentation électrique selon la revendication 1, **caractérisé en ce que** la ligne de court-circuit (5) est réalisée sous la forme d'un conducteur électrique sans consommateur d'énergie électrique supplémentaire de telle sorte qu'une résistance électrique de la ligne de court-circuit (5) correspond à une résistance électrique du conducteur électrique.

3. Dispositif d'alimentation électrique selon la revendication 1 ou 2, **caractérisé en ce qu'**au moins l'un des générateurs (1) se trouve en liaison fonctionnelle avec un moteur à combustion interne.

4. Dispositif d'alimentation électrique selon l'une des revendications 1 à 3, **caractérisé en ce qu'**au moins l'un des générateurs (1) est réalisé sous la forme d'un générateur de courant alternatif.

5. Dispositif d'alimentation électrique selon l'une des revendications 1 à 4, **caractérisé en ce qu'**au moins l'un des générateurs (1) est réalisé sous la forme d'un convertisseur d'énergie dans lequel de l'énergie électrique peut être générée de manière électrochimique.

6. Dispositif d'alimentation électrique selon l'une des revendications 1 à 5, **caractérisé en ce qu'**un accumulateur (3) se trouve dans au moins un circuit électrique (4).
